# EUROPEAN PATENT APPLICATION

(11) **EP 4 684 982 A1**
(43) Date of publication of application: **28.01.2026**
(21) Application number: 24190077.8
(22) Date of filing: 22.07.2024
(51) Int. Cl.: B60C 11/24, B60C 23/06, B60W 40/12

(54) **ESTIMATION OF PROBABILITY OF TIRE EXPLOSION**

(71) Applicant: Volvo Truck Corporation, 405 08 Göteborg (SE)
(72) Inventor: PANAHANDEH, Ghazaleh, 414 67 GÖTEBORG (SE)
(74) Representative: Ström & Gulliksson AB

(57) **Abstract**

A computer system is disclosed for dynamically estimating a probability of tire explosion for a vehicle. The computer system comprises processing circuitry configured to receive sensor data, analyze the received sensor data in relation to a data behavioral model, and provide a value for the probability of tire explosion based on the received sensor data as analyzed in relation to the data behavioral model.

The sensor data pertains to one or more of: wheel speed, wheel acceleration, and wheel vertical force. At least some of the sensor data is provided per wheel of the vehicle, and a difference metric specifies correspondence between the sensor data of two different wheels.

The data behavioral model specifies a higher value for the probability of tire explosion of a specific wheel when the difference metric of the specific wheel relative each of the other wheel(s) exceeds a tire explosion threshold than when the difference metric of the specific wheel relative at least one of the other wheel(s) falls below the tire explosion threshold.

Corresponding vehicle, method, computer program product, and non-transitory computer-readable storage medium are also disclosed.

## Description

### TECHNICAL FIELD

The disclosure relates generally to vehicle control. In particular aspects, the disclosure relates to estimation of probability of tire explosion. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In relation to vehicle control, it may be beneficial to detect and/or predict dangerous events such as tire explosions. One example where a prediction of tire blowouts is made using a machine learning tire burst warning model is provided in CN 115157938 A.

However, existing techniques sometimes fail to accurately detect and/or predict dangerous events such as tire explosions (by, e.g., missed prediction/detection and/or false predi cti on/detecti on).

Therefore, there is a need for alternative approaches for detecting and/or predicting dangerous events such as tire explosions.

### SUMMARY

According to a first aspect of the disclosure, a computer system is provided for dynamically estimating a probability of tire explosion for a vehicle. The computer system comprises processing circuitry configured to receive sensor data pertaining to one or more of: wheel speed, wheel acceleration, and wheel vertical force. The processing circuitry is also configured to analyze the received sensor data in relation to a data behavioral model, and provide a value for the probability of tire explosion based on the received sensor data as analyzed in relation to the data behavioral model. At least some of the sensor data is provided per wheel of the vehicle, and a difference metric specifies correspondence between the sensor data of two different wheels. The data behavioral model specifies a higher value for the probability of tire explosion of a specific wheel when the difference metric of the specific wheel relative each of the other wheel(s) exceeds a tire explosion threshold than when the difference metric of the specific wheel relative at least one of the other wheel(s) falls below the tire explosion threshold. The first aspect of the disclosure may seek to provide improved detection and/or prediction of tire explosions. For example, an improvement may be manifested by increased accuracy in detection and/or prediction of tire explosions (e.g., decreased occurrence of missed prediction/detection and/or false prediction/detection). A technical benefit may include that the vehicle can be safely controlled in relation to (e.g., before, during, after) tire explosions. A technical benefit may include that the vehicle can avoid (or at least reduce) unnecessary tire explosion mitigation actions caused by false prediction/detection.

Optionally in some examples, including in at least one preferred example, the data behavioral model may specify a plurality of event classes including tire explosion, and the processing circuitry may be further configured to provide respective probability values for one or more of the event classes based on the received sensor data as analyzed in relation to the data behavioral model. A technical benefit may include that the sensor data may be mapped to probabilities for different types of events (event classes), thereby providing structured information for efficient vehicle control.

Optionally in some examples, including in at least one preferred example, the data behavioral model may specify a higher value for probability of pothole when the difference metric for wheels on different sides of the vehicle exceeds a pothole threshold and the difference metric for wheels on a same side of the vehicle falls below the pothole threshold, than otherwise. A technical benefit may include reduced probability that a pothole event leads to false detection of tire explosion.

Optionally in some examples, including in at least one preferred example, the data behavioral model may specify a higher value for probability of speed bump when the difference metric for wheels on a same wheel axle falls below a speed bump threshold, than otherwise. A technical benefit may include reduced probability that a speed bump event leads to false detection of tire explosion.

Optionally in some examples, including in at least one preferred example, the data behavioral model may further specify a higher value for probability of speed bump when the difference metric for wheels on different wheel axles falls below the speed bump threshold, than otherwise. A technical benefit may include further reduced probability that a speed bump event leads to false detection of tire explosion.

Optionally in some examples, including in at least one preferred example, the data behavioral model may be configured for anomaly detection within the received sensor data. A technical benefit may include that large amounts of data may be efficiently processed to provide accurate tire explosion prediction/detection.

Optionally in some examples, including in at least one preferred example, the difference metric may pertain to sensor data comprising a detected anomaly. A technical benefit may include that the difference metric focuses on data which is potentially relevant for tire explosion prediction/detection.

According to a second aspect of the disclosure, a vehicle is provided, which comprises the computer system of the first aspect. The second aspect of the disclosure may seek to provide a vehicle with improved detection and/or prediction of tire explosions. A technical benefit may include that the vehicle can be safely controlled in relation to (e.g., before, during, after) tire explosions. A technical benefit may include that the vehicle can avoid (or at least reduce) unnecessary tire explosion mitigation actions caused by false prediction/detection.

According to a third aspect of the disclosure, a computer-implemented method is provided for dynamically estimating a probability of tire explosion for a vehicle. The method comprises receiving (by processing circuitry of a computer system) sensor data pertaining to one or more of: wheel speed, wheel acceleration, and wheel vertical force. The method also comprises analyzing (by the processing circuitry) the received sensor data in relation to a data behavioral model, and providing (by the processing circuitry) a value for the probability of tire explosion based on the received sensor data analyzed in relation to the data behavioral model. At least some of the sensor data is provided per wheel of the vehicle, and a difference metric specifies correspondence between the sensor data of two different wheels. The data behavioral model specifies a higher value for the probability of tire explosion of a specific wheel when the difference metric of the specific wheel relative each of the other wheel(s) exceeds a tire explosion threshold than when the difference metric of the specific wheel relative at least one of the other wheel(s) falls below the tire explosion threshold. The third aspect of the disclosure may seek to improve detection and/or prediction of tire explosions. A technical benefit may include that the vehicle can be safely controlled in relation to (e.g., before, during, after) tire explosions. A technical benefit may include that the vehicle can avoid (or at least reduce) unnecessary tire explosion mitigation actions caused by false prediction/detection.

Optionally in some examples, including in at least one preferred example, the data behavioral model may specify a plurality of event classes including tire explosion, and the method may comprise providing respective probability values for one or more of the event classes based on the received sensor data as analyzed in relation to the data behavioral model. A technical benefit may include that the sensor data may be mapped to probabilities for different types of events (event classes), thereby providing structured information for efficient vehicle control.

Optionally in some examples, including in at least one preferred example, the data behavioral model may specify a higher value for probability of pothole when the difference metric for wheels on different sides of the vehicle exceeds a pothole threshold and the difference metric for wheels on a same side of the vehicle falls below the pothole threshold, than otherwise. A technical benefit may include reduced probability that a pothole event leads to false detection of tire explosion.

Optionally in some examples, including in at least one preferred example, the data behavioral model may specify a higher value for probability of speed bump when the difference metric for wheels on a same wheel axle falls below a speed bump threshold, than otherwise. A technical benefit may include reduced probability that a speed bump event leads to false detection of tire explosion.

Optionally in some examples, including in at least one preferred example, the data behavioral model may further specify a higher value for probability of speed bump when the difference metric for wheels on different wheel axles falls below the speed bump threshold, than otherwise. A technical benefit may include further reduced probability that a speed bump event leads to false detection of tire explosion.

According to a fourth aspect of the disclosure, a computer program product is provided, which comprises program code for performing, when executed by processing circuitry, the method of the third aspect. The fourth aspect of the disclosure may seek to convey program code for improving detection and/or prediction of tire explosions. A technical benefit may include that new vehicles and/or legacy vehicles may be conveniently configured, by software installation/update, to perform improved detection and/or prediction of tire explosions.

According to a fifth aspect of the disclosure, a non-transitory computer-readable storage medium is provided, which comprises instructions, which when executed by processing circuitry, cause the processing circuitry to perform the method of the third aspect. The fifth aspect of the disclosure may seek to convey program code for improving detection and/or prediction of tire explosions. A technical benefit may include that new vehicles and/or legacy vehicles may be conveniently configured, by software installation/update, to perform improved detection and/or prediction of tire explosions.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a flowchart illustrating a method according to some examples.
**FIG. 2A** is a schematic drawing illustrating a vehicle according to some examples.
**FIG. 2B** is a schematic block diagram illustrating actuation control according to some examples.
**FIG. 3** is a collection of schematic drawings illustrating different scenarios for a vehicle according to some examples.
**FIG. 4** is a collection of schematic plots illustrating sensor data for different scenarios for a vehicle according to some examples.
**FIG. 5** is a schematic diagram illustrating a computer system for implementing examples disclosed herein, according to some examples.
**FIG. 6** is a schematic drawing illustrating a computer program product, in the form of a non-transitory computer-readable storage medium, according to some examples.
FIG. **7** is a schematic block diagram of a control unit according to some examples.

### DETAILED DESCRIPTION

The detailed description set forth below provides information and examples of the disclosed technology with sufficient detail to enable those skilled in the art to practice the disclosure.

Alternative approaches for detecting and/or predicting tire explosions are disclosed and exemplified herein.

According to some examples, the improvement is manifested by increased accuracy in detection and/or prediction of tire explosions (e.g., decreased occurrence of missed prediction/detection and/or false prediction/detection).

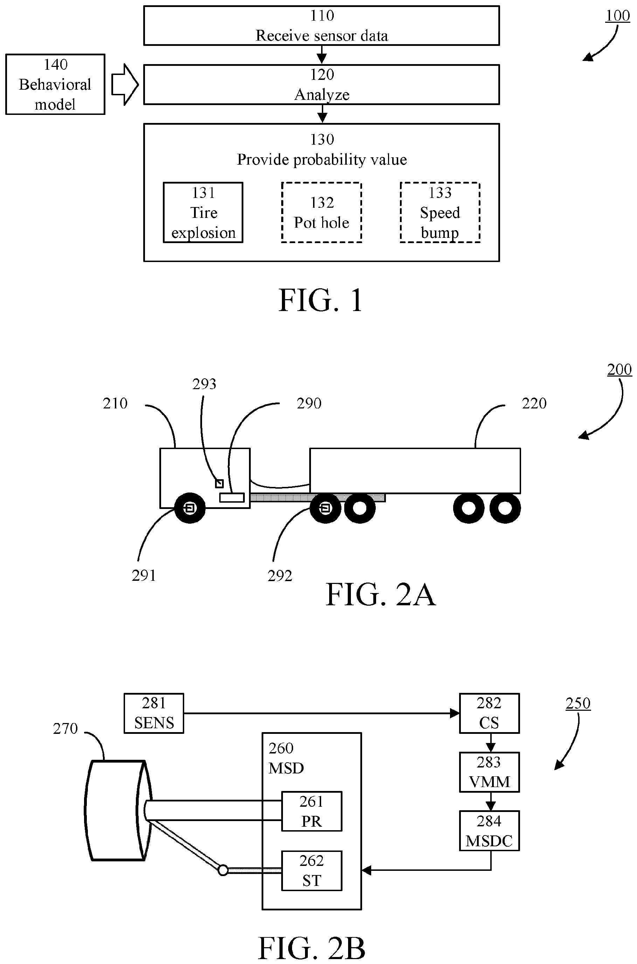

**FIG. 1** illustrates a method **100** for dynamically estimating a probability of tire explosion for a vehicle according to some examples. The method **100** is a computer-implemented method. For example, the method **100** may be performed by processing circuitry of a computer system.

Typically, such processing circuitry is comprised in a control unit of the vehicle (e.g., a vehicle control unit, VCU). However, the processing circuitry may be located remotely from the vehicle according to some examples (e.g., in a remote server provided cloud services). Furthermore, the processing circuitry may be distributed over several control units of the vehicle, and/or over several remote servers. In some examples, the processing circuitry is distributed between location(s) within the vehicle and remote location(s).

As illustrated by **110,** the method **100** comprises receiving sensor data. The sensor data may comprise any sensor data which is suitable for predicting/detecting tire explosion. Particularly, the sensor data pertains to at least one or more of a wheel speed, a wheel acceleration, and a wheel vertical force. Other types of sensor data which may be useful includes a tire temperature, a tire pressure, etc.

At least some of the sensor data is provided per wheel of the vehicle (all, or only some, of the wheels of the vehicle), while some of the sensor data may be provided per wheel axle, per vehicle unit (tractor, trailer, etc.), for the entire vehicle, etc.

The sensor data is provided by one or more sensor(s) of the vehicle. The sensor(s) may comprise any suitable sensor types (e.g., as known in the art). For example, the sensor(s) may comprise one or more of: inertial measurements unit(s) (IMU(s)), accelerometer(s), pressure sensor(s), etc. Sensor(s) configured to provide per wheel sensor data are typically mounted in/on a corresponding wheel, or in close vicinity to the corresponding wheel (e.g., at an end on a wheel axle, which is closest to the corresponding wheel).

As illustrated by **120** and **130,** the method **100** also comprises analyzing the received sensor data in relation to a data behavioral model **140** and providing a value for the probability of tire explosion (e.g., a probability value for an event class "tire explosion") based on the received sensor data analyzed in relation to the data behavioral model. In some examples, respective probability values may be provided for two or more event classes (e.g., "tire explosion", "pothole", "speed bump", etc.) based on the received sensor data as analyzed in relation to the data behavioral model.

The probability value(s) may be provided to a vehicle control function, which may be configured to control the vehicle accordingly. The control may comprise performing one or more vehicle control action(s) (e.g., tire explosion mitigation action(s)) responsive to the probability of tire explosion; for example to increase safety (e.g., reduce the probability of vehicle damage and/or driver/passenger injury) in relation to tire explosion.

The vehicle control actions may comprise any suitable actions related to vehicle control. Some examples of suitable vehicle control actions include (but are not limited to): performing a safe stop maneuver, overriding one or more driver input(s) (e.g., acceleration, brake, steering, etc.), decreasing velocity (longitudinal and/or lateral), decreasing a maximum allowable velocity (longitudinal and/or lateral), decreasing acceleration (longitudinal and/or lateral), decreasing a maximum allowable acceleration (longitudinal and/or lateral), preparing stability systems, tightening one or more vehicle control limit(s), etc.

The vehicle control limit(s) may include any suitable limits applied in the vehicle control. Some examples of suitable vehicle control limits include (but are not limited to): maximum velocity (longitudinal and/or lateral), maximum acceleration (longitudinal and/or lateral), maximum force (longitudinal and/or lateral), etc.

The probability value of tire explosion may relate to a probability of an upcoming/imminent tire explosion (prediction) and/or to a probability of a tire explosion having occurred (detection).

For example, an upcoming/imminent tire explosion may be indicated by sensor data patterns including one or more of: a relatively high (or increasing) tire temperature, a relatively high (or a steep change in) vertical force, etc.

For example, an occurring tire explosion may be indicated by sensor data patterns including one or more of: a steep change in vertical force, a sudden increase in wheel speed (lost grip), a steep increase in rotational acceleration of the wheel, a sudden decrease in tire pressure, etc.

Even though detection and/or prediction of tire explosion may be based on the sensor data patterns relating to a single wheel (the wheel for which tire explosion monitoring is performed), the accuracy of detection and/or prediction may be improved by comparison(s) of sensor data among two or more wheels, as exemplified herein.

A benefit of providing a probability value for tire explosion (as opposed to a binary value indicating only one of the alternatives "tire explosion" and "not tire explosion", e.g., as a "tire explosion" flag), and/or of providing probability value for prediction and/or detection, is that the vehicle may be more elaborately controlled than otherwise. Generally, a differentiation regarding actions taken in association with prediction/detection and probability value may take any suitable form.

For example, if tire explosion is predicted and/or if the probability value is relatively low, only slightly intrusive vehicle control actions may be taken (e.g., preparing stability systems, tightening vehicle control limits, slightly decreasing velocity, etc.). On the other hand, if tire explosion is detected and/or if the probability value is relatively high, more intrusive vehicle control actions may be taken (e.g., urgently decreasing velocity, performing a safe stop maneuver, overriding driver inputs, etc.).

Generally, the data behavioral model may be any model suitable for predicting/determining a probability of tire explosion based on the sensor data. For example, the data behavioral model may comprise typical behavior of sensor data when the vehicle is driven smoothly, as well as typical behavior of sensor data when the vehicle experiences disruptive event(s) (including tire explosion).

For example, the data behavioral model may be determined and/or dynamically updated by use of machine learning approaches. Training of the data behavioral model may comprise using sensor data collected before and/or during and/or directly after a verified tire explosion, as well as sensor data collected in verified scenarios without tire explosion (e.g., pothole, speed bump, bumpy road, smooth road, etc.).

Alternatively or additionally, the data behavioral model may be configured for anomaly detection within the received sensor data. An example machine learning approach suitable for anomaly detection is known as "isolated random forest". For example, the data behavioral model may allow for detection of anomalies in the sensor data, which may be associated with tire explosion, or with some other disruptive event (e.g., pothole or speed bump). To accurately detect and/or predict tire explosion, it may be beneficial to be able to discriminate - among the detected anomalies - between tire explosion events and less detrimental disruptive events (e.g., pothole or speed bump), which may be achieved by comparison(s) of sensor data among two or more wheels, as exemplified herein.

The data behavioral model may include knowledge regarding typical sensor data patterns (e.g., anomaly patterns) for one or more even type (including tire explosion). The event types may be termed as event classes.

The analysis of the received sensor data in relation to the data behavioral model may comprise comparing at least part of the received sensor data (e.g., an identified anomaly in the received sensor data) to typical sensor data patterns (e.g., anomaly patterns) of the data behavioral model and determining a value indicating how probable it is that the received sensor data indicates a specific event class.

As already mentioned, at least some of the sensor data is provided per wheel. Consequently, a difference metric may be determined which specifies correspondence between at least part of the sensor data (e.g., related to an identified anomaly) of two different wheels.

The difference metric may be any suitable difference metric (e.g., as known in the art). For example, the difference metric may pertain to sensor data comprising a detected anomaly. Alternatively or additionally, the difference metric may comprise a sum over a time window (e.g., related to an identified anomaly) of sample-wise squared, or absolute, differences between the sensor data of the two wheels. Yet alternatively or additionally, the difference metric may comprise using a same time window for wheels on a same wheel axle, and different time windows for wheels on different wheel axles (e.g., shifted in time corresponding to a distance between the wheel axles and a vehicle speed).

The typical sensor data patterns of the data behavioral model may include information relating to the difference metric of two different wheels.

Typically, the data behavioral model specifies a higher value for the probability of tire explosion of a specific wheel when the difference metric of the specific wheel relative each of the other wheel(s) exceeds a tire explosion threshold, than when the difference metric of the specific wheel relative at least one of the other wheel(s) falls below the tire explosion threshold. Thus, the behavioral model may specify a relatively high value for the probability of tire explosion when the sensor data of a single wheel differs significantly from corresponding sensor data of one or more (e.g., all) other wheel(s) of the vehicle, and a relatively low probability value when the sensor data is similar for at least two wheels of the vehicle.

According to some examples, the analysis of the received sensor data in relation to the data behavioral model may comprise detecting an anomaly in the received sensor data, and subsequent classification of the anomaly. For example, the anomaly detection may comprise using pattern recognition and/or machine learning approaches. Alternatively or additionally, the classification may comprise determining to what extent the anomaly indicates - occurring or upcoming - tire explosion (e.g., as exemplified in the following).

As already mentioned, the data behavioral model may specify a plurality of event classes (including "tire explosion"). Other example event classes include "pothole" and "speed bump".

In some examples, the data behavioral model may specify a higher value for probability of pothole when the difference metric for wheels on different sides of the vehicle exceeds a pothole threshold and the difference metric for wheels on a same side of the vehicle falls below the pothole threshold, than otherwise. Thus, the behavioral model may specify a relatively high value for the probability of pothole when the sensor data of two or more (e.g., all) wheels on one side of the vehicle is similar and the sensor data wheels on different sides of the vehicle differ significantly, and a relatively low probability value otherwise.

In some examples, the data behavioral model specifies a higher value for probability of speed bump when the difference metric for wheels on a same wheel axle falls below a speed bump threshold, than otherwise. Thus, the behavioral model may specify a relatively high value for the probability of speed bump when the sensor data of wheels on the same wheel axle is similar, and a relatively low probability value otherwise.

In some examples, the data behavioral model may specify a higher value for probability of speed bump when the difference metric for wheels on a same wheel axle falls below a speed bump threshold and the difference metric for wheels on different wheel axles also falls below the speed bump threshold, than otherwise. Thus, the behavioral model may specify a relatively high value for the probability of speed bump when the sensor data of wheels on the same wheel axle is similar and the sensor data for different wheel axles is similar, and a relatively low probability value otherwise.

Generally, the thresholds may be set to any suitable values, which may be fixed or dynamic. Two or more of the tire explosion threshold, the pothole threshold, and the speed bump threshold may have a same value, or all may have different values.

Information regarding the probability of pothole and/or speed bump may be useful in relation to the probability of tire explosion in that the information regarding the probability of pothole and/or speed bump may improve the prediction/detection of tire explosion (e.g., reduce the number of false detections). For example, when a probability value for tire explosion is provided together with probability value(s) for pothole and/or speed bump, and one of the latter is higher than the former, it may be assumed that the sensor data does not indicate tire explosion. Consequently, any vehicle control action(s) that would be taken if only the probability value for tire explosion was provided can be adjusted to be less intrusive, or can even be completely disregarded.

It should be noted that the approaches described herein relating to pothole and speed bump may be applied to any scenario with a bumpy road, and is not limited to the specific scenarios of pothole and speed bump.

Thus, systems and methods are provided for predicting/detecting tire explosions in vehicles. According to some examples, a combination of sensor data, machine learning models, and targeted scenario analysis is utilized to provide early and accurate detection of (potential) tire explosion events. Data from various sensors (e.g., including wheel speed sensors and/or IMUs) is used (e.g., by integration and preprocessing) to capture a comprehensive view of the vehicle behavior. Machine learning models (e.g., random forests, decision trees, isolation forests, etc.) may be beneficial. They can be specifically trained for different driving scenarios and/or may be continuously self-adapting to changing conditions.

**FIG. 2A** schematically illustrates an example vehicle **200** for cargo transport where the techniques disclosed herein can be advantageously applied. The vehicle **200** comprises a truck/tractor/towing unit **210** configured to tow one or more trailer unit(s) **220** in a known manner.

The tractor unit **210** and/or any of the trailer unit(s) **220** may comprise one or more sensor(s) **291, 292, 293** configured to provide sensor data as described and exemplified herein (compare with **110** of **FIG. 1****).** At least some of the sensor(s) - exemplified by **291, 292** - are configured to provide per wheel sensor data.

Furthermore, the tractor unit **210** and/or any of the trailer unit(s) **220** may comprise a vehicle control unit (VCU) **290** configured to perform various vehicle control functions, such as vehicle motion management (VMM). For example, the VCU **290** may comprise processing circuitry configured to perform the method **100** of **FIG. 1** and/or configured to perform one or more tire explosion mitigation action(s).

**FIG. 2B** schematically illustrates functionality **250** for actuation control of a wheel **270** according to some examples. The control of the wheel **270** is performed via some example motion support devices (MSDs) **260;** here comprising a propulsion device (PR) **261,** such as an electric machine (EM) and a power steering arrangement (ST) **262.** A power steering arrangement and a propulsion device are examples of actuators which can be controlled by one or more MSD control units (MSDC) **284.** It should be noted that any suitable actuator(s) may be used as MSD(s), and that **FIG. 2B** only represents an example of MSDs. Other examples include various types of brakes.

A vehicle motion management (VMM) function **283** may be employed to perform force allocation to meet received motion requests in a safe and robust manner. The VMM function **283** communicates actuator instructions to the different MSDs via the MDS control unit(s). The VMM function **283** manages both force generation and MSD coordination; i.e., it determines what forces that are required for different wheels and vehicle units in order to fulfil the motion requests, for instance to accelerate the vehicle according to a requested acceleration profile and/or to generate a requested curvature motion by the vehicle. For example, the VMM function **283** may be comprised in the VCU **290** of **FIG. 2A****.** Alternatively or additionally, the VMM function **283** may be configured to perform one or more tire explosion mitigation action(s) as discussed in connection with **FIG. 1****.**

To determine the actuator instructions based on the motion requests, the VMM function **283** typically uses estimated/predicted parameter values associated with the operating conditions of the vehicle (e.g., to dynamically adjust limitations of the force allocation). Examples of such parameter values may include the probability value(s) discussed in connection with **FIG. 1****.** The parameter values may be provided from a computer system (CS) **282,** and may be based on measurement data from one or more sensor(s) (SENS) **281.** For example, the computer system **282** may comprise processing circuitry configured to perform the method **100** of **FIG. 1****.** Alternatively or additionally, the computer system **282** may be comprised in the VCU **290** of **FIG. 2A****.**

In some examples, the VMM function **283** comprises motion estimation, global force generation, and motion coordination. The motion estimation is configured to provide a representation of the current motion of the vehicle to the global force generation. For example, the current motion may be represented by parameters such as vertical force *F_{z}*, friction between road and tire *µ*, vehicle velocity in relation to a vehicle-centered coordinate system *vₓ,* road gradient (or road slope) *α*, road banking *β*, etc. The global force generation is configured to determine global forces elements *v* based on the representation of the current motion and based on motion requests (e.g., an acceleration request, a steering angle, etc.), and to provide the determined global forces elements to the motion coordination. For example, the motion requests may originate from driver controls of the vehicle (e.g., steering wheel, accelerator pedal, brake pedal, etc.). Alternatively or additionally, the motion requests may originate from an autonomous - or semi-autonomous - driving control function of the vehicle (e.g., requesting longitudinal speed, longitudinal acceleration, steering angle, etc.). The global force generation may be improved by knowledge regarding the probability of tire explosion (predicted and/or detected), which may be provided as described herein. The motion coordination is configured to determine actuator request elements u based on the global forces elements *v*. The motion coordination is also configured to provide the actuator request elements *u*, for operation of the motion support devices **260.**

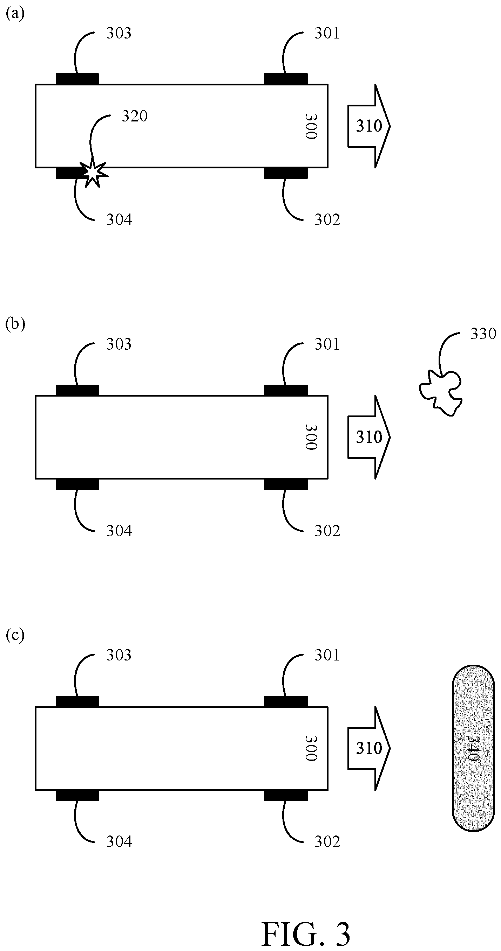

**FIG. 3** schematically illustrates three different scenarios (a), (b), and (c) for a vehicle **300** according to some examples. The vehicle **300** may, for example, schematically represent the vehicle **200** of **FIG. 2****.**

The vehicle **300** has four wheels **301, 302, 303, 304** (wherein **301, 302** belong to the same - front - wheel axle and **303, 304** belong to the same - rear - wheel axle) and is illustrated in a top view with a traveling direction **310.**

The scenarios represent, respectively, a tire explosion event, a pothole event, and a speed bump event, and **FIG. 3** may be seen as an exemplification of discrimination between the corresponding event classes.

In scenario (a), a tire explosion **320** occurs for the right rear wheel **304.** The tire explosion (and/or the events leading up to it) causes anomalies to occur in the collected sensor data. At least some of the sensor data which is specific for the wheel **304** comprises anomalies associated with the tire explosion, while the sensor data which is specific for each of the other wheels **301, 302, 303** comprises no (or only very slight) anomalies associated with the tire explosion.

This may be seen as an exemplification of when a difference metric of the specific wheel **304** relative each of the other wheel(s) **301, 302, 303** exceeds a tire explosion threshold. Then, a relatively high probability of tire explosion may be specified by the data behavioral model.

In scenario (b), the vehicle encounters a pothole **330** which aligns with the left side wheels **301** and **303.** The passing of the pothole causes anomalies to occur in the collected sensor data. At least some of the sensor data which is specific for the wheels **301** and **303** comprises anomalies associated with the pothole passage, while the sensor data which is specific for the other wheels **302, 304** comprises no (or only very slight) anomalies associated with the pothole passage. The sensor data anomalies for the wheel **303** is typically offset in time in relation to the sensor data anomalies for the wheel **301,** wherein the offset depends on the distance between these wheels and the velocity of the vehicle. Furthermore, the sensor data anomalies for the wheels **301** and **303** is typically relatively similar to each other (apart from the time offset).

This may be seen as an exemplification of when a difference metric of the wheels **301** and **303** relative each other falls below a pothole threshold and a difference metric of either of the wheels **301** and **303** relative any of the wheel **302, 304** exceeds a pothole threshold. Then, a relatively high probability of pothole may be specified by the data behavioral model.

In scenario (c), the vehicle encounters a speed bump **340** which affects all of the wheels **301, 302, 303, 304.** The passing of the speed bump causes anomalies to occur in the collected sensor data. At least some of the sensor data which is specific for each of the wheels **301, 302, 303, 304** comprises anomalies associated with the speed bump passage. The sensor data anomalies for the wheels **303** and **304** are typically offset in time in relation to the sensor data anomalies for the wheels **301** and **302,** wherein the offset depends on the distance between these wheel pairs and the velocity of the vehicle. Furthermore, the sensor data anomalies for the wheels **301, 302, 303, 304** is typically relatively similar to each other (apart from the time offset).

This may be seen as an exemplification of when a difference metric of the wheels **301, 302, 303, 304** relative each other falls below a speed bump threshold. Then, a relatively high probability of speed bump may be specified by the data behavioral model.

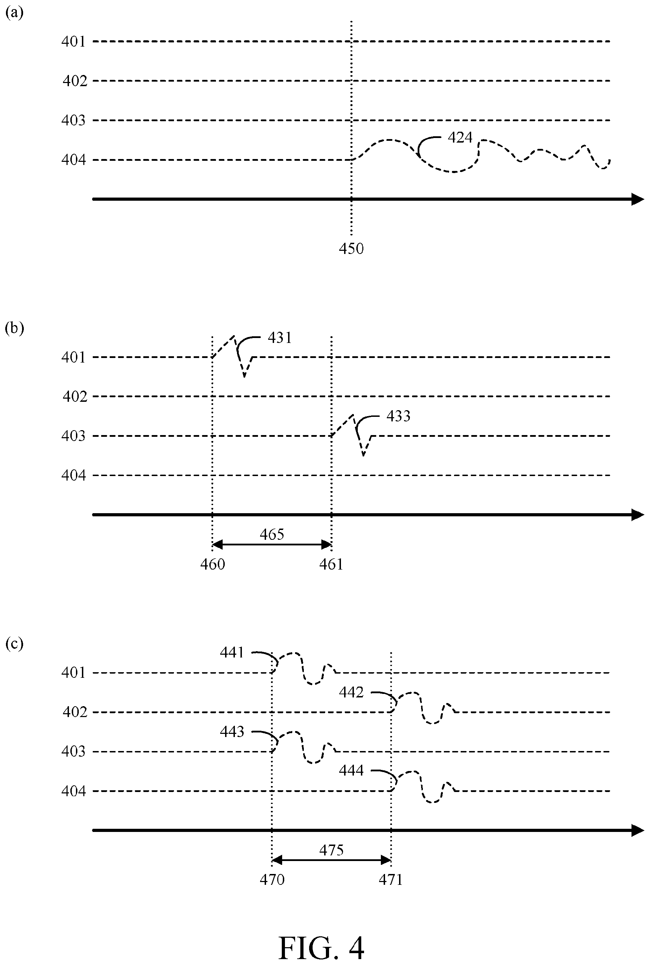

**FIG. 4** schematically illustrates wheel-specific sensor data **401, 402, 403, 404** (representing, e.g., wheel speed, wheel acceleration, or wheel vertical force) as a function of time for three different scenarios (a), (b), and (c) for a vehicle according to some examples. Sensor data without anomalies is represented by a straight line for simplicity, and anomalies are only shown by schematic representation.

The scenarios (a), (b), and (c) correspond - respectively - to the scenarios (a), (b), and (c) of **FIG. 3****,** and the wheel specific data **401, 402, 403, 404** correspond - respectively - to the wheels **301, 302, 303, 304.**

In scenario (a), a tire explosion occurs at time **450** for the wheel **304** and a corresponding anomaly **424** is seen in the corresponding sensor data **404,** while the sensor data **401, 402, 403** of the other wheels show no anomalies. Thus, at least some of the sensor data **404** which is specific for the wheel **304** comprises anomalies associated with the tire explosion, while the sensor data **401, 402, 403** which is specific for each of the other wheels **301, 302, 303** comprises no anomalies associated with the tire explosion.

In scenario (b), the vehicle encounters a pothole which aligns with wheels **301** and **303.** The wheel **301** passes the pothole at time **460** and the wheel **303** passes the pothole at time **461.** Corresponding anomalies **431** and **433** are seen in the corresponding sensor data **401, 403** (with a time offset **465),** while the sensor data **402, 404** of the other wheels show no anomalies. Thus, at least some of the sensor data **401, 403** which is specific for the wheels **301** and **303** comprises anomalies associated with the pothole passage, while the sensor data **402, 404** which is specific for the other wheels **302, 304** comprises no anomalies associated with the pothole passage.

In scenario (c), the vehicle encounters a speed bump which affects all of the wheels **301, 302, 303, 304.** The wheels **301, 302** pass the speed bump at time **470** and the wheels **303, 304** pass the speed bump at time **471.** Corresponding anomalies **441, 442, 443, 444** are seen in the corresponding sensor data **401, 402, 403, 404** (with a time offset **475).** Thus, at least some of the sensor data **401, 402, 403, 404** which is specific for each of the wheels **301, 302, 303, 304** comprises anomalies associated with the speed bump passage.

It may be noted that the anomalies relating to the same event are illustrated as similar (i.e., **431** and **433** are similar in shape, and **441, 442, 443** and **444** are similar in shape), which is a feature that can be used to discriminate between different even types.

Furthermore, the anomalies relating to different events are illustrated as less similar (i.e., **424** has a different shape than the other anomalies, and **431** and **433** have a different shape than the anomalies **441, 442, 443** and **444),** which is a feature that can be used to discriminate between different even types. However, in some examples the shape of anomalies may be similar even for different even types, in which case discrimination as explained herein, based on which wheels are affected, may be very beneficial.

It may also be noted that the anomaly **424** related to tire explosion has a long duration, while the anomalies relating to pothole or speed bump has a relatively short duration (and the sensor data returns to being anomaly-free thereafter), which is a feature that can be used to discriminate between different even types.

Generally, the term "probability of tire explosion" may be interpreted as a probability that a tire explosion has occurred and/or a probability that a tire explosion is about to occur in the near future (e.g., within a time window).

Generally, the term "probability of pothole" may be interpreted as a probability that the vehicle has driven over a pothole, and the term "probability of speed bump" may be interpreted as a probability that the vehicle has driven over a speed bump.

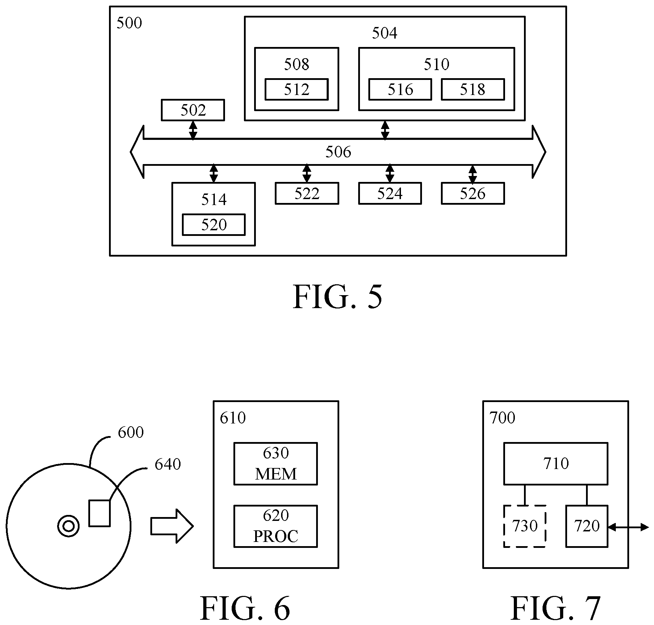

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device
interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a VCU.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 6** illustrates a computer program product exemplified as a non-transitory computer-readable medium in the form of a compact disc (CD) ROM **600.** The computer-readable medium has stored thereon program code **640** comprising instructions. The program code is loadable into processing circuitry (PROC; e.g., a data processing unit) **620,** which may, for example, be comprised in a device **610,** such as a VCU. When loaded into the processing circuitry, the program code may be stored in a memory (MEM) **630** associated with, or comprised in, the processing circuitry. According to some examples, the program code may, when loaded into, and run by, the processing circuitry, cause execution of method steps according to, for example, any of the methods described herein.

**FIG. 7** schematically illustrates, in terms of a number of functional units, the components of a control unit **700** according to some examples. This control unit **700** may be comprised in the vehicle **200** (e.g., in the form of a VCU **290).** Processing circuitry **710** is provided using any combination of one or more of a suitable central processing unit CPU, multiprocessor, microcontroller, digital signal processor DSP, etc., capable of executing software instructions stored in a computer program product, e.g. in the form of a storage medium **730.** The processing circuitry **710** may further be provided as at least one application specific integrated circuit ASIC, or field programmable gate array FPGA.

Particularly, the processing circuitry **710** is configured to cause the control unit **700** to perform a set of operations, or steps, such as any of the methods discussed herein.

For example, the storage medium **730** may store the set of operations, and the processing circuitry **710** may be configured to retrieve the set of operations from the storage medium **730** to cause the control unit **700** to perform the set of operations. The set of operations may be provided as a set of executable instructions. Thus, the processing circuitry **710** is thereby arranged to execute methods as herein disclosed. In particular, there is disclosed a control unit **700** for an articulated vehicle **200** comprising a tractor **210** and/or one or more towed vehicle units **220,** the control unit comprising processing circuitry **710,** an interface **720** coupled to the processing circuitry **710,** and a memory **730** coupled to the processing circuitry **710,** wherein the memory comprises machine readable computer program instructions that, when executed by the processing circuitry, causes the control unit to perform the methods discussed herein.

The storage medium **730** may also comprise persistent storage, which, for example, can be any single one or combination of magnetic memory, optical memory, solid state memory or even remotely mounted memory.

The control unit **700** may further comprise an interface **720** for communications with at least one external device. As such, the interface **720** may comprise one or more transmitters and receivers, comprising analogue and digital components and a suitable number of ports for wireline or wireless communication.

The processing circuitry **710** controls the general operation of the control unit **700,** e.g., by sending data and control signals to the interface **720** and the storage medium **730,** by receiving data and reports from the interface **720,** and by retrieving data and instructions from the storage medium **730.** Other components, as well as the related functionality, of the control node are omitted in order not to obscure the concepts presented herein.

### A non-exhaustive list of examples:

**Example 1:** A computer system for dynamically estimating a probability of tire explosion for a vehicle, the computer system comprising processing circuitry configured to: receive sensor data pertaining to one or more of: wheel speed, wheel acceleration, and wheel vertical force; analyze the received sensor data in relation to a data behavioral model; and provide a value for the probability of tire explosion based on the received sensor data as analyzed in relation to the data behavioral model, wherein at least some of the sensor data is provided per wheel of the vehicle, and wherein a difference metric specifies correspondence between the sensor data of two different wheels, and wherein the data behavioral model specifies a higher value for the probability of tire explosion of a specific wheel when the difference metric of the specific wheel relative each of the other wheel(s) exceeds a tire explosion threshold than when the difference metric of the specific wheel relative at least one of the other wheel(s) falls below the tire explosion threshold.

**Example 2:** The computer system of **Example 1,** wherein the data behavioral model specifies a plurality of event classes including tire explosion, and wherein the processing circuitry is further configured to provide respective probability values for one or more of the event classes based on the received sensor data as analyzed in relation to the data behavioral model.

**Example 3:** The computer system of any of **Examples 1-2,** wherein the data behavioral model specifies a higher value for probability of pothole when the difference metric for wheels on different sides of the vehicle exceeds a pothole threshold and the difference metric for wheels on a same side of the vehicle falls below the pothole threshold, than otherwise.

**Example 4:** The computer system of any of **Examples 1-3,** wherein the data behavioral model specifies a higher value for probability of speed bump when the difference metric for wheels on a same wheel axle falls below a speed bump threshold, than otherwise.

**Example 5:** The computer system of **Example 4,** wherein the data behavioral model further specifies a higher value for probability of speed bump when the difference metric for wheels on different wheel axles falls below the speed bump threshold, than otherwise.

**Example 6:** The computer system of any of **Examples 1-5,** wherein the data behavioral model is configured for anomaly detection within the received sensor data.

**Example 7:** The computer system of **Example 6,** wherein the difference metric pertains to sensor data comprising a detected anomaly.

**Example 8:** The computer system of any of **Examples 1-7,** wherein the processing circuitry is configured to provide the value for the probability of tire explosion to a vehicle motion management function.

**Example 9:** The computer system of any of **Examples 1-8,** wherein the processing circuitry is further configured to control the vehicle to perform a safe stop maneuver responsive to the value for the probability of tire explosion exceeding a probability threshold.

**Example 10:** A vehicle comprising the computer system of any of **Examples 1-9.**

**Example 11:** A computer-implemented method for dynamically estimating a probability of tire explosion for a vehicle, the method comprising: receiving (by processing circuitry of a computer system) sensor data pertaining to one or more of: wheel speed, wheel acceleration, and wheel vertical force; analyzing (by the processing circuitry) the received sensor data in relation to a data behavioral model; and providing (by the processing circuitry) a value for the probability of tire explosion based on the received sensor data analyzed in relation to the data behavioral model, wherein at least some of the sensor data is provided per wheel of the vehicle, wherein a difference metric specifies correspondence between the sensor data of two different wheels, and wherein the data behavioral model specifies a higher value for the probability of tire explosion of a specific wheel when the difference metric of the specific wheel relative each of the other wheel(s) exceeds a tire explosion threshold than when the difference metric of the specific wheel relative at least one of the other wheel(s) falls below the tire explosion threshold.

**Example 12:** The method of **Example 11,** wherein the data behavioral model specifies a plurality of event classes including tire explosion, the method comprising providing (by the processing circuitry) respective probability values for one or more of the event classes based on the received sensor data as analyzed in relation to the data behavioral model.

**Example 13:** The method of any of **Examples 11-12,** wherein the data behavioral model specifies a higher value for probability of pothole when the difference metric for wheels on different sides of the vehicle exceeds a pothole threshold and the difference metric for wheels on a same side of the vehicle falls below the pothole threshold, than otherwise.

**Example 14:** The method of any of Examples **11-13,** wherein the data behavioral model specifies a higher value for probability of speed bump when the difference metric for wheels on a same wheel axle falls below a speed bump threshold, than otherwise.

**Example 15:** The method of **Example 14,** wherein the data behavioral model further specifies a higher value for probability of speed bump when the difference metric for wheels on different wheel axles falls below the speed bump threshold, than otherwise.

**Example 16:** The method of any of **Examples 11-15,** wherein the data behavioral model is configured for anomaly detection within the received sensor data.

**Example 17:** The method of **Example 16,** wherein the difference metric pertains to sensor data comprising a detected anomaly.

**Example 18:** The method of any of **Examples 11-17,** wherein the value for the probability of tire explosion is provided to a vehicle motion management function.

**Example 19:** The method of any of **Examples 11-18,** further comprising controlling (by the processing circuitry) the vehicle to perform a safe stop maneuver responsive to the value for the probability of tire explosion exceeding a probability threshold.

**Example 20:** A computer program product comprising program code for performing, when executed by processing circuitry, the method of any of **Examples 12-19.**

**Example 21:** A non-transitory computer-readable storage medium comprising instructions, which when executed by processing circuitry, cause the processing circuitry to perform the method of any of **Examples 11-19.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (500) for dynamically estimating a probability of tire explosion for a vehicle (200, 300), the computer system comprising processing circuitry configured to:
receive (110) sensor data (401, 402, 403, 404) pertaining to one or more of: wheel speed, wheel acceleration, and wheel vertical force;
analyze (120) the received sensor data in relation to a data behavioral model (140); and
provide (130) a value for the probability of tire explosion (131, 320) based on the received sensor data as analyzed in relation to the data behavioral model,
wherein at least some of the sensor data is provided per wheel (301, 302, 303, 304) of the vehicle, and wherein a difference metric specifies correspondence between the sensor data of two different wheels, and
wherein the data behavioral model specifies a higher value for the probability of tire explosion of a specific wheel (304) when the difference metric of the specific wheel relative each of the other wheel(s) (301, 302, 303) exceeds a tire explosion threshold than when the difference metric of the specific wheel relative at least one of the other wheel(s) falls below the tire explosion threshold.

2. The computer system of claim 1, wherein the data behavioral model specifies a plurality of event classes including tire explosion, and wherein the processing circuitry is further configured to provide respective probability values for one or more of the event classes based on the received sensor data as analyzed in relation to the data behavioral model.

3. The computer system of any of claims 1-2, wherein the data behavioral model specifies a higher value for probability of pothole (132, 330) when the difference metric for wheels (301, 302; 301, 304; 303, 302; 303, 304) on different sides of the vehicle exceeds a pothole threshold and the difference metric for wheels (301, 303; 302, 304) on a same side of the vehicle falls below the pothole threshold, than otherwise.

4. The computer system of any of claims 1-3, wherein the data behavioral model specifies a higher value for probability of speed bump (133, 340) when the difference metric for wheels (301, 302; 303, 304) on a same wheel axle falls below a speed bump threshold, than otherwise.

5. The computer system of claim 4, wherein the data behavioral model further specifies a higher value for probability of speed bump (133, 340) when the difference metric for wheels (301, 303; 301, 304; 302, 303; 302; 304) on different wheel axles falls below the speed bump threshold, than otherwise.

6. The computer system of any of claims 1-5, wherein the data behavioral model is configured for anomaly detection within the received sensor data.

7. The computer system of claim 6, wherein the difference metric pertains to sensor data comprising a detected anomaly (424, 431, 433, 441, 442, 443, 444).

8. A vehicle (200, 300) comprising the computer system of any of claims 1-7.

9. A computer-implemented method (100) for dynamically estimating a probability of tire explosion for a vehicle (200, 300), the method comprising:
receiving (110), by processing circuitry of a computer system, sensor data (401, 402, 403, 404) pertaining to one or more of: wheel speed, wheel acceleration, and wheel vertical force;
analyzing (120), by the processing circuitry, the received sensor data in relation to a data behavioral model (140); and
providing (130), by the processing circuitry, a value for the probability of tire explosion (131, 320) based on the received sensor data analyzed in relation to the data behavioral model,
wherein at least some of the sensor data is provided per wheel (301, 302, 303, 304) of the vehicle, and wherein a difference metric specifies correspondence between the sensor data of two different wheels, and
wherein the data behavioral model specifies a higher value for the probability of tire explosion of a specific wheel when the difference metric of the specific wheel relative each of the other wheel(s) exceeds a tire explosion threshold than when the difference metric of the specific wheel relative at least one of the other wheel(s) falls below the tire explosion threshold.

10. The method of claim 9, wherein the data behavioral model specifies a plurality of event classes including tire explosion, the method comprising:
providing, by the processing circuitry, respective probability values for one or more of the event classes based on the received sensor data as analyzed in relation to the data behavioral model.

11. The method of any of claims 9-10, wherein the data behavioral model specifies a higher value for probability of pothole (132, 330) when the difference metric for wheels on different sides of the vehicle exceeds a pothole threshold and the difference metric for wheels on a same side of the vehicle falls below the pothole threshold, than otherwise.

12. The method of any of claims 9-11, wherein the data behavioral model specifies a higher value for probability of speed bump (133, 340) when the difference metric for wheels on a same wheel axle falls below a speed bump threshold, than otherwise.

13. The method of claim 12, wherein the data behavioral model further specifies a higher value for probability of speed bump (133, 340) when the difference metric for wheels on different wheel axles falls below the speed bump threshold, than otherwise.

14. A computer program product (600) comprising program code for performing, when executed by processing circuitry, the method of any of claims 9-13.

15. A non-transitory computer-readable storage medium (600) comprising instructions, which when executed by processing circuitry, cause the processing circuitry to perform the method of any of claims 9-13.
